# EUROPÄISCHE PATENTSCHRIFT

(11) **EP 3 011 199 B1**
(45) Veröffentlichungstag und Bekanntmachung des Hinweises auf die Patenterteilung: **22.03.2017**
(21) Anmeldenummer: 14723331.6
(22) Anmeldetag: 07.05.2014
(51) Int. Cl.: F16H 3/66

(54) **MEHRSTUFENGETRIEBE**
MULTISPEED GEARBOX
BOÎTE DE VITESSES À PLUSIEURS ÉTAGES

(30) Priorität: 22.06.2013 DE 102013010523; 11.07.2013 DE 102013011569
(43) Veröffentlichungstag der Anmeldung: 27.04.2016
(73) Patentinhaber: Daimler AG, 70327 Stuttgart (DE)
(72) Erfinder: SCHILDER, Tobias, 70435 Stuttgart (DE); RIEDL, Klaus, 72074 Tübingen (DE); SCHWEITZER, Jürgen, 70794 Filderstadt (DE); TEVETOGLU, Recep, 70374 Stuttgart (DE); LOTTER, Roland, 71404 Korb (DE)
(74) Vertreter: JENSEN & SON
(86) Internationale Anmeldenummer: PCT/EP2014/001217
(87) Internationale Veröffentlichungsnummer: WO 2014/202166

(56) Entgegenhaltungen:
- WO-A1-2008/012170
- DE-A1-102008 000 207
- DE-A1-102008 055 626
- DE-B3-102009 001 253
- US-A1- 2007 161 453

## Beschreibung

Die Erfindung betrifft ein Mehrstufengetriebe nach dem Oberbegriff des Anspruchs 1.

Aus der DE 10 2008 055 626 A1 ist bereits ein Mehrstufengetriebe mit zumindest vier entlang einer Hauptrotationsachse hintereinander angeordneten Planetenradstufen, die jeweils ein Sonnenrad, einen Planetenradträger und ein Hohlrad aufweisen bekannt.

Der Erfindung liegt insbesondere die Aufgabe zugrunde, für das aus der DE 10 2008 055 626 A1 bekannte Mehrstufengetriebe sowie mit dem aus der DE 10 2008 055 626 A1 kinematisch verwandte Mehrstufengetriebe ein Lagerungskonzept bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einem Mehrstufengetriebe mit zumindest vier entlang einer Hauptrotationsachse hintereinander angeordneten Planetenradstufen, die jeweils ein Sonnenrad, einen Planetenradträger und ein Hohlrad aufweisen.

Es wird vorgeschlagen, dass das Mehrstufengetriebe ein Lager aufweist, das das Sonnenrad der zweiten Planetenradstufe und das Hohlrad der dritten Planetenradstufe axial gegeneinander abstützt. Dadurch kann erreicht werden, dass Komponenten gegeneinander gelagert werden, die insbesondere in Vorwärtsgetriebegängen, in denen hohe Drehzahlen einer Antriebsmaschine erreicht werden, geringe Relativdrehzahlen aufweist, wodurch insbesondere Verluste in den Lagern gering gehalten werden können. Dadurch kann insbesondere im Hinblick auf einen Verbrauch ein optimiertes Lagerungskonzept bereitgestellt werden, wodurch insbesondere Betriebskosten gesenkt werden können. Unter "axial gegeneinander abstützen" soll dabei insbesondere verstanden werden, dass das Lager dazu vorgesehen ist, eine entlang der Hauptrotationsachse wirkende Kraft zu übertragen. Unter "vorgesehen" soll insbesondere speziell programmiert, ausgelegt und/oder ausgestattet verstanden werden. Unter einer "Hauptrotationsachse" soll in diesem Zusammenhang insbesondere eine gemeinsame Drehachse der Planetenradstufen verstanden werden. Vorzugsweise umfasst das Mehrstufengetriebe dabei eine Schalteinheit mit zumindest einem Kopplungselement und einer Zwischenwelle, die das Kopplungselement und das Sonnenrad der zweiten Planetenradstufe permanent drehfest miteinander verbindet und die ein eingangsseitiges Lagerabstützelement für das Lager ausbildet. Außerdem ist es vorteilhaft, wenn das Mehrstufengetriebe ein permanent drehfest mit dem Hohlrad der dritten Planetenradstufe verbundenes Stützelement aufweist, das ein ausgangsseitiges Lagerabstützelement für das Lager ausbildet.

Weiter wird vorgeschlagen, dass das Mehrstufengetriebe ein zweites Lager aufweist, das das Sonnenrad der zweiten Planetenradstufe und den Planetenradträger der zweiten Planetenradstufe axial gegeneinander abstützt. Dadurch kann das Lagerungskonzept weiter optimiert werden. Vorzugsweise umfasst das Mehrstufengetriebe dabei eine Zwischenwelle, die das Hohlrad der ersten Planetenradstufe und den Planetenradträger der zweiten Planetenradstufe permanent drehfest miteinander verbindet und die ein eingangsseitiges Lagerabstützelement für das zweite Lager ausbildet. Außerdem ist es vorteilhaft, wenn die Zwischenwelle, die das Kopplungselement und das Sonnenrad der zweiten Planetenradstufe permanent drehfest miteinander verbindet, ein ausgangsseitiges Lagerabstützelement für das zweite Lager ausbildet.

Zudem wird vorgeschlagen, dass das Mehrstufengetriebe ein drittes Lager aufweist, das das Hohlrad der dritten Planetenradstufe und den Planetenradträger der dritten Planetenradstufe axial gegeneinander abstützt. Insbesondere in Verbindung mit dem ersten Lager und dem zweiten Lager kann dadurch eine Anzahl der benötigten Lager auf elf Lager insgesamt begrenzt werden, wodurch das Mehrstufengetriebe auch hinsichtlich der Herstellungskosten optimiert werden kann. Vorzugsweise umfasst das Mehrstufengetriebe dabei eine weitere Schalteinheit mit zumindest einem Kopplungselement und einer Getriebeausgangswelle, die den Planetenradträger der dritten Planetenradstufe und das Kopplungselement permanent drehfest miteinander verbindet und die ein ausgangsseitiges Lagerabstützelement für das dritte Lager ausbildet. Außerdem ist es vorteilhaft, wenn das permanent drehfest mit dem Planetenradträger verbundene Stützelement ein eingangsseitiges Lagerabstützelement für das dritte Lager ausbildet.

Weiter wird vorgeschlagen, dass zumindest das Lager, das das Sonnenrad der zweiten Planetenradstufe und das Hohlrad der dritten Planetenradstufe axial gegeneinander abstützt, innerhalb eines Innenkreisdurchmessers des Hohlrads der zweiten Planetenradstufe und/oder innerhalb eines Innenkreisdurchmessers des Hohlrads der dritten Planetenradstufe angeordnet ist. Dadurch können insbesondere Biegemomente reduziert werden, wodurch eine deutlich stabilere Abstützung erreicht werden kann. Besonders vorteilhaft ist zumindest das Lager, das das Sonnenrad der zweiten Planetenradstufe und das Hohlrad der dritten Planetenradstufe axial gegeneinander abstützt, innerhalb einer Kreisbahn angeordnet, auf der Planetenradträger der zweiten Planetenradstufe Planetenräder um das Sonnenrad der zweiten Planetenradstufe führt.

Außerdem wird vorgeschlagen, dass das erste Lager, das zweite Lager und das dritte Lager axial unmittelbar benachbart angeordnet sind. Dadurch können insbesondere Axialkräfte, die auf eines der Lager wirken, auf das unmittelbar benachbarte Lager übertragen und durch dieses abgestützt werden, wodurch insbesondere Biegemomente, die zu einer Verbiegung von durch die Lager abgestützten Komponenten führen können, verringert oder vermieden werden können. Unter "unmittelbar benachbart" soll dabei insbesondere verstanden werden, dass die Lager einen axialen Abstand zueinander aufweisen, der kleiner ist als eine Breite der axial benachbart angeordneten Planetenradstufen. Vorzugsweise weisen axial benachbarte Lager einen zumindest im Wesentlichen gleichen mittleren Durchmesser auf, wobei unter "zumindest im Wesentlichen gleich" verstanden werden soll, dass die mittleren Durchmesser um höchstens 20 % voneinander abweichen.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Getriebeschema eines Mehrstufengetriebes mit einem Lagerungskonzept,

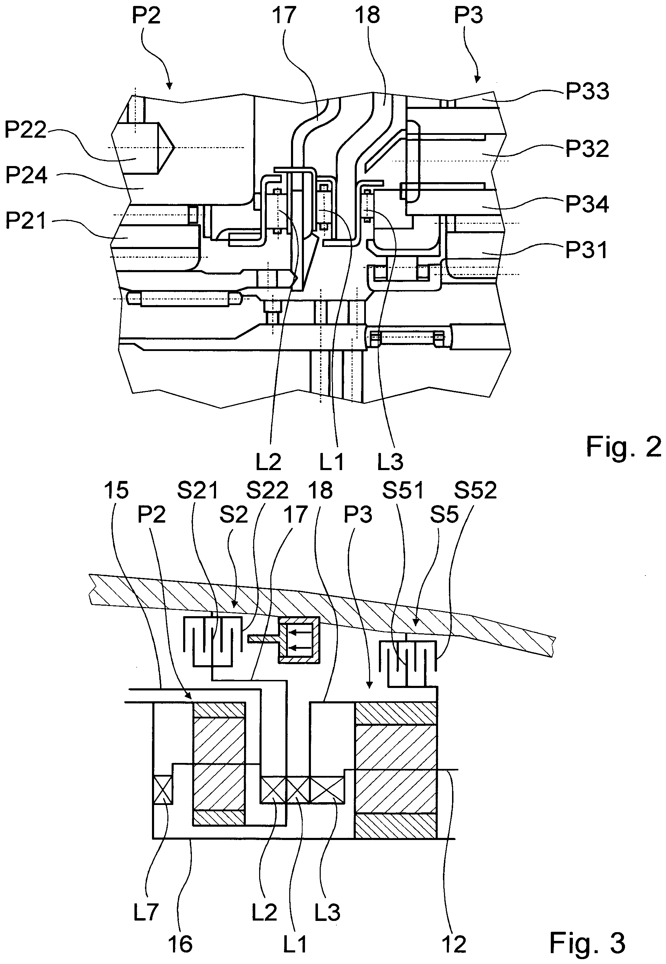

- Fig. 2: eine Lageranordnung in einem Querschnitt und
- Fig. 3: eine schematische Darstellung der Lageranordnung aus Fig. 2.

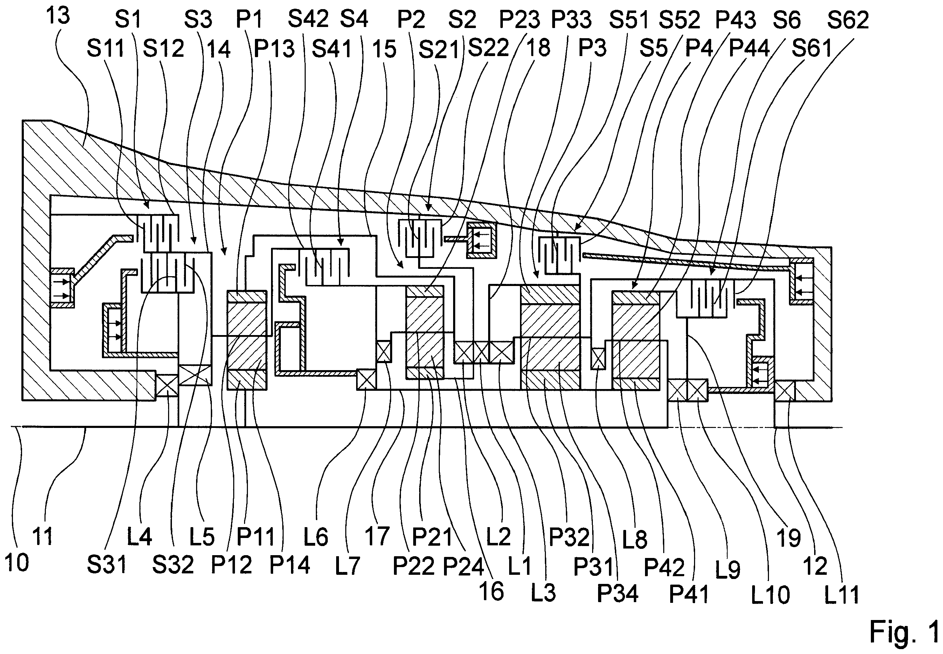

Figur 1 zeigt ein Mehrstufengetriebe für ein Kraftfahrzeug. Das Mehrstufengetriebe weist vier Planetenradstufen P1, P2, P3, P4 auf. Die erste Planetenradstufe P1, die zweite Planetenradstufe P2, die dritte Planetenradstufe P3 und die vierte Planetenradstufe P4 sind hintereinander entlang einer Hauptrotationsachse 10 angeordnet. Sämtliche Planetenradstufen P1, P2, P3, P4 des Mehrstufengetriebes weisen einen Einfachplanetenradsatz auf. Das Mehrstufengetriebe weist sechs Schalteinheiten S1, S2, S3, S4, S5, S6 auf. Diese sind zumindest konstruktiv dazu vorgesehen, neun Vorwärtsgetriebegänge V1, V2, V3, V4, V5, V6, V7, V8, V9 zu schalten. Aus der DE 10 2008 055 626 A1, auf deren Offenbarungsgehalt explizit verwiesen werden soll, ist dabei ein Mehrstufengetriebe bekannt, das kinematisch dem im Folgenden beschriebenen Mehrstufengetriebe entspricht. Insbesondere in Bezug auf eine Schaltlogik der Vorwärtsgetriebegänge V1, V2, V3, V4, V5, V6, V7, V8, V9 soll daher explizit auf die DE 10 2008 055 626 A1 verwiesen werden.

Das Mehrstufengetriebe ist dazu vorgesehen, eine nicht näher dargestellte Antriebsmaschine eines Kraftfahrzeugs mit nicht näher dargestellten Antriebsrädern des Kraftfahrzeugs zu verbinden. Mittels des Mehrstufengetriebes kann ein Übersetzungsverhältnis zwischen der Antriebsmaschine und den Antriebsrädern eingestellt werden. Das Mehrstufengetriebe kann mit einem Hybridantriebsmodul verbunden werden, mittels dem das Antriebsmoment verändert werden kann. Weiter kann mittels des Hybridantriebsmoduls und dem Mehrstufengetriebe ein CVT realisiert werden, wodurch ein Mehrstufengetriebe realisiert werden kann, dessen Übersetzungsverhältnis zumindest in Teilbereichen stufenlos eingestellt werden kann.

Das Mehrstufengetriebe weist eine Getriebeeingangswelle 11 auf, die dazu vorgesehen ist, ein Antriebsmoment in das Mehrstufengetriebe einzuleiten. Die Getriebeeingangswelle 11 ist dazu vorgesehen, drehfest mit der Antriebsmaschine verbunden zu werden. Weiter weist das Mehrstufengetriebe eine Getriebeausgangswelle 12 auf, die dazu vorgesehen ist, ein Antriebsmoment aus dem Mehrstufengetriebe auszuleiten. Die Getriebeausgangswelle 12 ist dazu vorgesehen, mit Antriebsrädern des Kraftfahrzeugs verbunden zu werden. Die Getriebeeingangswelle 11 und die Getriebeausgangswelle 12 sind koaxial zueinander auf gegenüberliegenden Seiten angeordnet.

Die erste Planetenradstufe P1 ist eingangsseitig angeordnet. Die erste Planetenradstufe P1 weist einen Einfachplanetenradsatz auf. Die Planetenradstufe P1 umfasst ein erstes Sonnenrad P11, ein erstes Hohlrad P13 und einen ersten Planetenradträger P12. Der Planetenradträger P12 führt Planetenräder P14 auf einer Kreisbahn. Die Planetenräder P14 kämmen mit dem Sonnenrad P11 und mit dem Hohlrad P13. Die Planetenräder P14 sind drehbar auf dem Planetenradträger P12 gelagert.

Die zweite Planetenradstufe P2 ist mittig eingangsseitig angeordnet. Die zweite Planetenradstufe P2 weist einen Einfachplanetenradsatz auf. Die zweite Planetenradstufe P2 umfasst ein zweites Sonnenrad P21, ein zweites Hohlrad P23 und einen zweiten Planetenradträger P22. Der Planetenradträger P22 führt Planetenräder P24 auf einer Kreisbahn. Die Planetenräder P24 kämmen mit dem Sonnenrad P21 und mit dem Hohlrad P23. Die Planetenräder P24 sind drehbar auf dem Planetenradträger P22 gelagert.

Die dritte Planetenradstufe P3 ist mittig ausgangsseitig angeordnet. Die dritte Planetenradstufe P3 weist einen Einfachplanetenradsatz auf. Die Planetenradstufe P3 umfasst ein drittes Sonnenrad P31, ein drittes Hohlrad P33 und einen dritten Planetenradträger P32. Der Planetenradträger P32 führt Planetenräder P34 auf einer Kreisbahn. Die Planetenräder P34 kämmen mit dem Sonnenrad P31 und mit dem Hohlrad P33. Die Planetenräder P34 sind drehbar auf dem Planetenradträger P32 gelagert.

Die vierte Planetenradstufe P4 ist ausgangsseitig angeordnet. Die vierte Planetenradstufe P4 weist einen Einfachplanetenradsatz auf. Die Planetenradstufe P4 umfasst ein viertes Sonnenrad P41, ein viertes Hohlrad P43 und einen vierten Planetenradträger P42. Der Planetenradträger P42 führt Planetenräder P44 auf einer Kreisbahn. Die Planetenräder P44 kämmen mit dem Sonnenrad P41 und mit dem Hohlrad P43. Die Planetenräder P44 sind drehbar auf dem Planetenradträger P42 gelagert.

Die drei Schalteinheiten S3, S4, S6 sind als Kupplungseinheiten ausgebildet. Sie weisen jeweils ein erstes drehbares Kopplungselement S31, S41, S61 und ein zweites drehbares Kopplungselement S32, S42, S62 auf. Die drei Schalteinheiten S3, S4, S6 sind jeweils dazu vorgesehen, ihre beiden Kopplungselemente S31, S32, S41, S42, S61, S62 drehfest miteinander zu verbinden.

Die drei Schalteinheiten S1, S2, S5 sind als Bremseinheiten ausgebildet und weisen jeweils ein drehbar angeordnetes erstes Kopplungselement S11, S21, S51 und ein drehfest angeordnetes zweites Kopplungselement S12, S22, S52 auf. Die Schalteinheiten S1, S2, S5 sind jeweils dazu vorgesehen, ihr drehbar angeordnetes erstes Kopplungselement S11, S21, S51 mit dem drehfest angeordneten zweiten Kopplungselement S21, S22, S52 und damit mit einem Getriebegehäuse 13 zu verbinden.

Die Schalteinheiten S1, S2, S5, die als Bremseinheiten ausgeführt sind, sowie die Schalteinheit S3, die als Kupplungseinheit ausgeführt ist, sind außenliegend ausgeführt. Die Schalteinheiten S4, S6, die als Kupplungseinheiten ausgeführt sind, sind innenliegend ausgeführt. Die Schalteinheiten S1, S3 sind in axialer Richtung eingangsseitig der ersten Planetenradstufe P1 angeordnet. Die Schalteinheit S4 ist in axialer Richtung zwischen der ersten Planetenradstufe P1 und der zweiten Planetenradstufe P2 angeordnet. Die Schalteinheit S2 ist in axialer Richtung in Höhe der zweiten Planetenradstufe P2 angeordnet. Die Schalteinheit S5 ist in axialer Richtung in Höhe der dritten Planetenradstufe P3 angeordnet. Die Schalteinheit S6 ist ausgangsseitig der vierten Planetenradstufe P4 angeordnet.

Zur Verbindung der Planetenradstufen P1, P2, P3, P4 miteinander und mit den Schalteinheiten S1, S2, S3, S4, S5, S6 weist das Mehrstufengetriebe zusätzlich zu der Getriebeeingangswelle 11 und der Getriebeausgangswelle 12 vier Zwischenwellen 14, 15, 16, 17 auf. Zur Betätigung der Schalteinheiten S1, S2, S3, S4, S5, S6 umfasst das Mehrstufengetriebe sechs Aktuatoren, die jeweils einer der Schalteinheiten S1, S2, S3, S4, S5, S6 zugeordnet sind.

Die Getriebeeingangswelle 11 verbindet das erste Kopplungselement S31 der Schalteinheit S3, das ersten Sonnenrad P11 und den vierten Planetenradträger P42 permanent drehfest miteinander. Die Getriebeeingangswelle 11 ist zur Anbindung des Kopplungselements S31 eingangsseitig der ersten Planetenradstufe P1 radial nach außen geführt. Das erste Sonnenrad P11 ist permanent drehfest auf der Getriebeeingangswelle 11 angeordnet. Zur Anbindung des vierten Planetenradträgers P42 durchsetzt die Getriebeeingangswelle 11 sämtliche Planetenradstufen P1, P2, P3, P4 und ist ausgangsseitig an den vierten Planetenradträger P42 angebunden.

Die Zwischenwelle 14 verbindet das erste Kopplungselement S11 der Schalteinheit S1, das zweite Kopplungselement S32 der Schalteinheit S3, den ersten Planetenradträger P12 und das zweite Kopplungselement S42 der Schalteinheit S4 miteinander. Zur Anbindung der Kopplungselemente S11, S32 ist die Zwischenwelle 14 eingangsseitig der ersten Planetenradstufe P1 radial nach außen geführt. Zur Anbindung des Kopplungselements S42 ist die Zwischenwelle 14 durch die erste Planetenradstufe P1 hindurchgeführt.

Die Zwischenwelle 15 verbindet das erste Hohlrad P13 und den zweiten Planetenradträger P22 permanent drehfest miteinander. Die Zwischenwelle 15 ist dazu radial außen um die Schalteinheit S4 und die zweite Planetenradstufe P2 herumgeführt. Die Zwischenwelle 15 ist in Form eines Topfes ausgeführt.

Die Zwischenwelle 16 verbindet das zweite Sonnenrad P21 und das erste Kopplungselement S21 der zweiten Schalteinheit S2 permanent drehfest miteinander. Zur Anbindung des Kopplungselement S21 ist die Zwischenwelle 16 zwischen der zweiten Planetenradstufe P2 und der dritten Planetenradstufe P3 radial nach außen geführt.

Die Zwischenwelle 17 verbindet das erste Kopplungselement S41 der vierten Schalteinheit S4, das zweite Hohlrad P23, das dritte Sonnenrad P31 und das vierte Sonnenrad P41 permanent drehfest miteinander. Zur Anbindung des Kopplungselements S41 und des Hohlrads P23 ist die Zwischenwelle 17 zwischen der ersten Planetenradstufe P1 und der zweite Planetenradstufe P2 radial nach außen geführt. Zur Anbindung der Sonnenräder P31, P41 durchsetzt die Zwischenwelle 17 das zweite Sonnenrad P21. Das dritte Sonnenrad P31 und das vierte Sonnenrad P41 sind direkt auf der Zwischenwelle 14 angeordnet.

Die Getriebeausgangswelle 12 verbindet den dritten Planetenradträger P32 und das zweite Kopplungselement S62 der sechsten Schalteinheit S6 permanent drehfest miteinander. Zur Anbindung des dritten Planetenradträgers P32 ist die Getriebeausgangswelle 12 zwischen der dritten Planetenradstufe P3 und der vierten Planetenradstufe P4 radial nach innen geführt. Die Getriebeausgangswelle 12 begrenzt das Mehrstufengetriebe ausgangsseitig.

Mittels der Schalteinheit S3 können die Sonne P11 und der erste Planetenradträger P12 drehfest miteinander verbunden werden, wodurch mittels der Schalteinheit S3 die erste Planetenradstufe P1 verblockt werden kann. Mittels der Schalteinheit S4 können das zweite Hohlrad P23 und der erste Planetenträger P12 drehfest miteinander verbunden werden. Außerdem sind das erste Hohlrad P13 und der zweite Planetenradträger P22 ständig drehfest miteinander verbunden. Durch Schließen der Schalteinheiten S3 und S4 können die erste Planetenradstufe P1 und die zweite Planetenradstufe P2 miteinander verblockt werden.

Die Vorwärtsgetriebegänge V1-V9 werden mittels der Schalteinheiten S1, S2, S3, S4, S5, S6 geschaltet. In den Vorwärtsgetriebegängen V1-V9 sind jeweils höchstens drei der Schalteinheiten S1, S2, S3, S4, S5, S6 geschlossen, während die restlichen Schalteinheiten S1, S2, S3, S4, S5, S6 geöffnet sind. Bei einem Schaltvorgang von einem der Vorwärtsgetriebegänge V1-V9 in einen benachbarten Vorwärtsgetriebegang V1-V9 werden zum Beispiel jeweils höchstens zwei der Schalteinheiten S1, S2, S3, S4, S5, S6 verändert. Bei jedem Schaltvorgang von einem der Vorwärtsgetriebegänge V1-V9 in einen benachbarten Vorwärtsgetriebegang V1-V9 bleiben jeweils zwei bereits geschlossene Schalteinheiten S1, S2, S3, S4, S5, S6 geschlossen.

Zur Lagerung umfasst das Mehrstufengetriebe eine Mehrzahl von Lagern L1-L11. Die Lager L1-L11 sind jeweils als Axiallager ausgebildet, die insbesondere zur Abstützung von entlang der Hauptrotationsachse 10 wirkenden Axialkräften vorgesehen sind. Radiallager, insbesondere zur Lagerung der Getriebeeingangswelle 11 und der Getriebeausgangswelle 12, sind nicht näher dargestellt. Die Lager L1-L11 bilden eine Axialabstützung zur axialen Lagerung sämtlicher drehbar angeordneter Komponenten aus.

Das erste Lager L1 stützt das Sonnenrad P21 der zweiten Planetenradstufe P2 und das Hohlrad P33 der dritten Planetenradstufe P3 axial gegeneinander ab. Die Zwischenwelle 16, die das erste Kopplungselement S21 der zweiten Schalteinheit S2 und das zweite Sonnenrad P21 permanent drehfest miteinander verbindet, bildet ein eingangsseitiges Lagerabstützelement für das erste Lager L1 aus. Weiter umfasst das Mehrstufengetriebe ein permanent drehfest mit dem dritten Hohlrad P33 sowie dem ersten Kopplungselement S51 der Schalteinheit S5 verbundenes Stützelement 18, das ein ausgangsseitiges Lagerabstützelement für das erste Lager L1 ausbildet. Das Stützelement 18 ist ausgehend von dem dritten Hohlrad P33 zwischen der zweiten Planetenradstufe P2 und der dritten Planetenradstufe P3 radial nach innen geführt und bildet an seinen radial inneren Ende das ausgangsseitige Abstützelement für das Lager L1 aus. Die Zwischenwelle 16 bildet in einem Bereich, in dem sie zwischen der zweiten Planetenradstufe P2 und der dritten Planetenradstufe P3 radial nach außen geführt ist, das eingangsseitige Lagerabstützelement für das erste Lager L1 aus.

Das zweite Lager L2 stützt das Sonnenrad P21 der zweiten Planetenradstufe P2 und den Planetenradträger P22 der zweiten Planetenradstufe P2 axial gegeneinander ab. Die Zwischenwelle 15, die das erste Hohlrad P13 und den zweiten Planetenradträger P22 permanent drehfest miteinander verbindet, bildet ein eingangsseitiges Lagerabstützelement aus, gegen das das zweite Lager L2 abgestützt ist. Die Zwischenwelle 16, die das erste Kopplungselement S21 der zweiten Schalteinheit S2 und das zweite Sonnenrad P21 permanent drehfest miteinander verbindet, bildet ein ausgangsseitiges Lagerabstützelement für das zweite Lager L2 aus. Das ausgangsseitige Lagerabstützelement des zweiten Lagers L2 ist dabei in Bezug auf das eingangsseitige Lagerabstützelement für das Lager L1 auf einer gegenüberliegenden Seite der Zwischenwelle 16 angeordnet. Die Zwischenwelle 15 ist zur Ausbildung des eingangsseitigen Lagerabstützelements für das Lager L2 über den zweiten Planetenradträger P22 hinaus radial nach innen geführt.

Das dritte Lager L3 stützt das Hohlrad P33 der dritten Planetenradstufe P3 und den Planetenradträger P32 der dritten Planetenradstufe P3 axial gegeneinander ab. Die Getriebeausgangswelle 12, die den dritten Planetenradträger P32 und das zweite Kopplungselement S62 der sechsten Schalteinheit S6 permanent drehfest miteinander verbindet, bildet ein ausgangsseitiges Lagerabstützelement für das dritte Lager L3 aus. Das permanent drehfest mit dem dritten Planetenradträger P32 verbundene Stützelement 18 bildet ein eingangsseitiges Lagerabstützelement für das dritte Lager L3 aus. Das eingangsseitige Lagerabstützelement des dritten Lagers L3 ist dabei in Bezug auf das ausgangsseitige Lagerabstützelement für das Lager L1 auf einer gegenüberliegenden Seite der Getriebeausgangswelle 12 angeordnet. Die Getriebeausgangswelle 12 ist zur Ausbildung des ausgangsseitigen Lagerabstützelements durch den dritten Planetenradträger P32 hindurchgeführt.

Das vierte Lager L4 stützt das Getriebegehäuse 13 und das erste Kopplungselement S31 der dritten Schalteinheit S3 axial gegeneinander ab. Das Getriebegehäuse 13 bildet ein eingangsseitiges Lagerabstützelement für das vierte Lager L4 aus. Die Getriebeeingangswelle 11, die das erste Kopplungselement S31 der dritten Schalteinheit S3, das erste Sonnenrad P11 und den vierten Planetenradträger P42 permanent drehfest miteinander verbindet, bildet ein ausgangsseitiges Lagerabstützelement für das vierte Lager L4 aus.

Das fünfte Lager L5 stützt das erste Kopplungselement S31 der dritten Schalteinheit S3 und den Planetenradträger P12 der ersten Planetenradstufe P1 axial gegeneinander ab. Die Getriebeeingangswelle 11, die das erste Kopplungselement S31 der dritten Schalteinheit S3, das erste Sonnenrad P11 und den vierten Planetenradträger P42 permanent drehfest miteinander verbindet, bildet ein eingangsseitiges Lagerabstützelement für das vierte Lager L4 aus. Die Zwischenwelle 14, die das erste Kopplungselement S11 der ersten Schalteinheit S1, das zweite Kopplungselement S32 der dritten Schalteinheit S3, den ersten Planetenradträger P12 und das zweite Kopplungselement S42 der vierten Schalteinheit S4 permanent drehfest miteinander verbindet, bildet ein ausgangsseitiges Lagerabstützelement für das fünfte Lager L5 aus. Die Zwischenwelle 14 ist zur Ausbildung des ausgangsseitigen Lagerabstützelements für das Lager L5 über den ersten Planetenradträger P12 radial nach innen geführt.

Das sechste Lager L6 stützt den Planetenradträger P12 der ersten Planetenradstufe P1 und das Hohlrad P23 der zweiten Planetenradstufe P2 axial gegeneinander ab. Gegen die Zwischenwelle 14, die das erste Kopplungselement S11 der ersten Schalteinheit S1, das zweite Kopplungselement S32 der dritten Schalteinheit S3, den ersten Planetenradträger P12 und das zweite Kopplungselement S42 der vierten Schalteinheit S4 permanent drehfest miteinander verbindet, ist der Akutator zur Betätigung der Schalteinheit S4 abgestützt. Der Aktuator bildet ein eingangsseitiges Lagerabstützelement für das sechste Lager L6 aus. Die Zwischenwelle 17, die das erste Kopplungselement S41 der vierten Schalteinheit S4, das zweite Hohlrad P23, das dritte Sonnenrad P31 und das vierte Sonnenrad P41 permanent drehfest miteinander verbindet, bildet ein ausgangsseitiges Abstützelement für das sechste Lager L6 aus.

Das siebte Lager L7 stützt das Hohlrad P23 der zweiten Planetenradstufe P2 und den Planetenradträger P22 der zweiten Planetenradstufe P2 axial gegeneinander ab. Die Zwischenwelle 17, die das erste Kopplungselement S41 der vierten Schalteinheit S4, das zweite Hohlrad P23, das dritte Sonnenrad P31 und das vierte Sonnenrad P41 permanent drehfest miteinander verbindet, bildet ein eingangsseitiges Abstützelement für das siebte Lager L7 aus. Die Zwischenwelle 15, die das erste Hohlrad P13 und den zweiten Planetenradträger P22 permanent drehfest miteinander verbindet, bildet ein ausgangsseitiges Lagerabstützelement für das siebte Lager L7 aus. Die Zwischenwelle 15 ist zur Ausbildung des ausgangsseitigen Lagerabstützelements durch den zweiten Planetenradträger P12 hindurch und radial nach innen geführt.

Das achte Lager L8 stützt den Planetenradträger P32 der dritten Planetenradstufe P3 und den Planetenradträger P42 der vierten Planetenradstufe P4 axial gegeneinander ab. Die Getriebeausgangswelle 12, die den dritte Planetenradträger P32 und das zweite Kopplungselement S62 der sechsten Schalteinheit S6 permanent drehfest miteinander verbindet, bildet ein eingangsseitiges Abstützelement für das achte Lager L8 aus. Die Getriebeeingangswelle 11, die das erste Kopplungselement S31 der dritten Schalteinheit S3, das erste Sonnenrad P11 und den vierten Planetenradträger P42 permanent drehfest miteinander verbindet, bildet ein ausgangsseitiges Lagerabstützelement für das achte Lager L8 aus.

Das neunte Lager L9 stützt den Planetenradträger P42 der vierten Planetenradstufe P4 und das Hohlrad P43 der vierten Planetenradstufe P4 axial gegeneinander ab. Die Getriebeeingangswelle 11, die das erste Kopplungselement S31 der dritten Schalteinheit S3, das erste Sonnenrad P11 und den vierten Planetenradträger P42 permanent drehfest miteinander verbindet, bildet ein eingangsseitiges Lagerabstützelement für das neunte Lager L9 aus. Das Mehrstufengetriebe umfasst ein permanent drehfest mit dem vierten Hohlrad P43 verbundenes Stützelement 19 das ein ausgangsseitiges Lagerabstützelement für das neunte Lager L9 ausbildet. Das Stützelement 19 ist drehfest mit dem ersten Koppelelement S61 der Schalteinheit S6 verbunden.

Das zehnte Lager L10 stützt das Hohlrad P43 der vierten Planetenradstufe P4 und die Getriebeausgangswelle 12 axial gegeneinander ab. Das permanent drehfest mit dem vierten Hohlrad P43 verbundenes Stützelement 19 bildet ein eingangsseitiges Lagerabstützelement für das zehnte Lager L10 ausbildet. Die Getriebeausgangswelle 12, die den dritten Planetenradträger P32 und das zweite Kopplungselement S62 der sechsten Schalteinheit S6 permanent drehfest miteinander verbindet, bildet ein ausgangsseitiges Lagerabstützelement für das zehnte Lager L10 aus.

Das elfte Lager L11 stützt die Getriebeausgangswelle 12 und das Getriebegehäuse 13 axial gegeneinander ab. Die Getriebeausgangswelle 12, die den dritten Planetenradträger P32 und das zweite Kopplungselement S62 der sechsten Schalteinheit S6 permanent drehfest miteinander verbindet, bildet ein eingangsseitiges Lagerabstützelement für das elfte Lager L11 aus. Das Getriebegehäuse 13 bildet ein ausgangsseitiges Lagerabstützelement für das elfte Lager L11 aus.

Die Lager L1-L11 sind vorzugsweise als Wälzkörperlager ausgebildet. Grundsätzlich ist aber zumindest teilweise auch eine Ausgestaltung als Gleitlager denkbar. Die Lagerabstützelemente selbst können grundsätzlich als Aufnahme für einen Lagerring ausgebildet sein oder einstückig mit dem Lagerring ausgeführt sein. In einer einstückigen Ausgestaltung bilden die Lagerabstützelemente direkt den Lagerring aus, der zur Führung von Wälzkörpern vorgesehen ist. In einer solchen Ausgestaltung weist beispielsweise die Zwischenwelle 16, die die Lagerabstützelemente der Lager L1, L2 ausbildet, Wälzflächen für die Wälzkörper der Lager L1, L2 auf. In einer mehrteiligen Ausgestaltung bilden die Lagerabstützelemente vorzugsweise Aufnahmen aus, die zur Befestigung der Lagerringe dienen, beispielsweise durch Verpressen der Lagerringe mit der entsprechenden Zwischenwelle 14, 15, 16, 17.

Die Lager L4, L5 sind eingangsseitig der ersten Planetenradstufe P1 angeordnet. Die Lager L6, L7 sind zwischen der ersten Planetenradstufe P1 und der zweiten Planetenradstufe P2 angeordnet. Die Lager L1, L2, L3 sind zwischen der zweiten Planetenradstufe P2 und der dritten Planetenradstufe P3 angeordnet. Das Lager L8 ist zwischen der dritten Planetenradstufe P3 und der vierten Planetenradstufe P4 angeordnet. Die Lager L9, L10, L11 sind ausgangsseitig der vierten Planetenradstufe P4 angeordnet. Sämtliche Lager L1-L11 sind radial innerhalb eines Innenkreisdurchmessers der jeweils benachbarten Hohlräder P13, P23, P33, P43 angeordnet. Die Lager L1, L2, L3 sind beispielsweise radial innerhalb des Innenkreisdurchmessers der Hohlräder P23, P33 angeordnet.

Die Lager L1, L2, L3 sind dabei innerhalb der Kreisbahn angeordnet, auf der der Planetenradträger P32 der dritten Planetenradstufe P3 die Planetenräder P34 führt. Dabei sind insbesondere die Wälzflächen der Lager L1, L2, L3 radial innerhalb der Kreisbahn angeordnet, auf der die Planetenradträger P22, P32 jeweils ihre Planetenräder P24, P34 führen. Die Wälzflächen der Lager L1, L2, L3 sind dabei radial überschneidend angeordnet, d.h. in radialer Richtung sind die Wälzflächen der Lager L1, L2, L3 zumindest teilweise in einem gleichen Bereich angeordnet.

Axial sind das erste Lager L1, das zweite Lager L2 und das dritte Lager L3 unmittelbar benachbart angeordnet. Eine axiale Kraft, die auf eines der Lager L1, L2, L3 wirkt, wird damit unmittelbar auf die jeweils benachbarten Lager L1, L2, L3 übertragen, insbesondere ohne dass auf das Stützelement 18 eine Biegekraft wirkt. Das vierte Lager L4 und das fünfte Lager L5 sind ebenfalls unmittelbar benachbart angeordnet. Das sechste Lager L6 und das siebte Lager L7 sind radial gegeneinander versetzt angeordnet. Das neunte Lager L9 und das zehnte Lager L10 sind unmittelbar benachbart angeordnet. Das elfte Lager L11, das axial über die zwei Lager L9, L10 abgestützt ist, ist radial in einem gleichen Bereich angeordnet wie die Lager L9, L10.

## Patentansprüche

1. Mehrstufengetriebe mit zumindest vier entlang einer Hauptrotationsachse (10) hintereinander angeordneten Planetenradstufen (P1, P2, P3, P4), die jeweils ein Sonnenrad (P11, P21, P31, P41), einen Planetenradträger (P12, P22, P32, P42) und ein Hohlrad (P13, P23, P33, P43) aufweisen,
**gekennzeichnet durch**
ein Lager (L1), das das Sonnenrad (P21) der zweiten Planetenradstufe (P2) und das Hohlrad (P33) der dritten Planetenradstufe (P3) axial gegeneinander abstützt.

2. Mehrstufengetriebe nach Anspruch 1,
**gekennzeichnet durch**
eine Schalteinheit (S2) mit zumindest einem Kopplungselement (S21) und einer Zwischenwelle (16), die das Kopplungselement (S21) und das Sonnenrad (P21) der zweiten Planetenradstufe (P2) permanent drehfest miteinander verbindet und die ein eingangsseitiges Lagerabstützelement für das Lager (L1) ausbildet.

3. Mehrstufengetriebe nach Anspruch 1 oder 2,
**gekennzeichnet durch**
ein permanent drehfest mit dem Hohlrad (P33) der dritten Planetenradstufe (P3) verbundenes Stützelement (18), das ein ausgangsseitiges Lagerabstützelement für das Lager (L1) ausbildet.

4. Mehrstufengetriebe nach einem der vorhergehenden Ansprüche,
**gekennzeichnet durch**
ein zweites Lager (L2), das das Sonnenrad (P21) der zweiten Planetenradstufe (P2) und den Planetenradträger (P22) der zweiten Planetenradstufe (P2) axial gegeneinander abstützt.

5. Mehrstufengetriebe nach Anspruch 4,
**gekennzeichnet durch**
eine Zwischenwelle (15), die das Hohlrad (P13) der ersten Planetenradstufe (P1) und den Planetenradträger (P22) der zweiten Planetenradstufe (P2) permanent drehfest miteinander verbindet und die ein eingangsseitiges Lagerabstützelement für das zweite Lager (L2) ausbildet.

6. Mehrstufengetriebe zumindest nach den Ansprüchen 2 und 4,
**dadurch gekennzeichnet, dass**
die Zwischenwelle (16), die das Kopplungselement (S21) und das Sonnenrad (P21) der zweiten Planetenradstufe (P2) permanent drehfest miteinander verbindet, ein ausgangsseitiges Lagerabstützelement für das zweite Lager (L2) ausbildet.

7. Mehrstufengetriebe nach einem der vorhergehenden Ansprüche,
**gekennzeichnet durch**
ein drittes Lager (L3), das das Hohlrad (P33) der dritten Planetenradstufe (P3) und den Planetenradträger (P32) der dritten Planetenradstufe (P3) axial gegeneinander abstützt.

8. Mehrstufengetriebe nach Anspruch 7,
**gekennzeichnet durch**
eine weitere Schalteinheit (S6) mit zumindest einem Kopplungselement (S62) und einer Getriebeausgangswelle (12), die den Planetenradträger (P32) der dritten Planetenradstufe (P3) und das Kopplungselement (S62) permanent drehfest miteinander verbindet und die ein ausgangsseitiges Lagerabstützelement für das dritte Lager (L3) ausbildet.

9. Mehrstufengetriebe zumindest nach den Ansprüchen 3 und 7,
**dadurch gekennzeichnet, dass**
das permanent drehfest mit dem Hohlrad (P33) der dritten Planetenradstufe (P3) verbundene Stützelement (18) ein eingangsseitiges Lagerabstützelement für das dritte Lager (L3) ausbildet.

10. Mehrstufengetriebe nach einem der vorhergehenden Ansprüche,
**dadurch gekennzeichnet, dass**,
zumindest das Lager (L1), das das Sonnenrad (P21) der zweiten Planetenradstufe (P2) und das Hohlrad (P33) der dritten Planetenradstufe (P3) axial gegeneinander abstützt, innerhalb eines Innenkreisdurchmessers des Hohlrads (P23) der zweiten Planetenradstufe (P2) und/oder innerhalb eines Innenkreisdurchmessers des Hohlrads (P33) der dritten Planetenradstufe (P3) angeordnet ist.

11. Mehrstufengetriebe zumindest nach den Ansprüchen 1, 4 und 7,
**dadurch gekennzeichnet, dass**
das erste Lager (L1), das zweite Lager (L2) und das dritte Lager (L3) axial unmittelbar benachbart angeordnet sind.

## Claims

1. Multispeed transmission having at least four planetary gear sets (P1, P2, P3, P4) arranged one behind the other along a main rotation shaft (10), each having a sun gear (P11, P21, P31, P41), a planetary gear carrier (P12, P22, P32, P42) and a ring gear (P13, P23, P33, P43),
**characterised by**
a bearing (L1) which axially supports the sun gear (P21) of the second planetary gear set (P2) and the ring gear (P33) of the third planetary gear set (P3) against each other.

2. Multispeed transmission according to claim 1,
**characterised by**
a shifting unit (S2) having at least one coupling element (S21) and one intermediate shaft (16) which permanently connects the coupling element (S21) and the sun gear (P21) of the second planetary gear set (P2) to each other fixed against rotation, and which forms an input-side bearing support element for the bearing (L1).

3. Multispeed transmission according to claim 1 or 2,
**characterised by**
a support element (18) permanently connected to the ring gear (P33) of the third planetary gear set (P3) fixed against rotation and forming an output-side bearing support element for the bearing (L1).

4. Multispeed transmission according to one of the preceding claims, **characterised by**
a second bearing (L2) which axially supports the sun gear (P21) of the second planetary gear set (P2) and the planetary gear carrier (P22) of the second planetary gear set (P2) against each other.

5. Multispeed transmission according to claim 4,
**characterised by**
an intermediate shaft (15) which permanently connects the ring gear (P13) of the first planetary gear set (P1) and the planetary gear carrier (P22) of the second planetary gear set (P2) to each other fixed against rotation and which forms an input-side bearing support element for the second bearing (L2).

6. Multispeed transmission at least according to claims 2 and 4,
**characterised in that**
the intermediate shaft (16), which permanently connects the coupling element (S21) and the sun gear (P21) of the second planetary gear set (P2) to each other fixed against rotation, forms an output-side bearing support element for the second bearing (L2).

7. Multispeed transmission according to one of the preceding claims,
**characterised by**
a third bearing (L3) which supports the ring gear (P33) of the third planetary gear set (P3) and the planetary gear carrier (P32) of the third planetary gear set (P3) axially against each other.

8. Multispeed transmission according to claim 7,
**characterised by**
a further shifting unit (S6) having at least one coupling element (S62) and a transmission output shaft (12), which permanently connects the planetary gear carrier (P32) of the third planetary gear set (P3) and the coupling element (S62) to each other fixed against rotation and which forms an output-side bearing support element for the third bearing (L3).

9. Multispeed transmission at least according to claims 3 and 7,
**characterised in that**
the support element (18) permanently connected fixed against rotation to the ring gear (P33) of the third planetary gear set (P3) forms an input-side bearing support element for the third bearing (L3).

10. Multispeed transmission according to one of the preceding claims,
**characterised in that**
at least the bearing (L1), which supports the sun gear (P21) of the second planetary gear set (P2) and the ring gear (P33) of the third planetary gear set (P3) axially against each other, is arranged within an inner circle diameter of the ring gear (P23) of the second planetary gear set (P2) and / or within an inner circle diameter of the ring gear (P33) of the third planetary gear set (P3).

11. Multispeed gear transmission at least according to claims 1, 4 and 7,
**characterised in that**
the first bearing (L1), the second bearing (L2) and the third bearing (L3) are arranged directly axially adjacently.

## Revendications

1. Boîte à plusieurs vitesses comprenant au moins quatre étages de pignons planétaires (P1, P2, P3, P4) disposés les uns derrière les autres le long d'un axe de rotation principal (10), qui présentent respectivement un pignon solaire (P11, P21, P31, P41), un support de pignon planétaire (P12, P22, P32, P42) et une couronne (P13, P23, P33, P43), **caractérisée par** un palier (L1) qui étaie le pignon (P21) du deuxième étage de pignons planétaires (P2) et la couronne (P33) du troisième étage de pignons planétaires (P3) axialement l'un contre l'autre.

2. Boîte à plusieurs vitesses selon la revendication 1, **caractérisée par** une unité de commutation (S2) comprenant au moins un élément d'accouplement (S21) et un arbre intermédiaire (16) qui relie en rotation en continu l'élément d'accouplement (S21) et le pignon solaire (P21) du second étage de pignons planétaires (P2) et qui forme un élément de support de palier côté entrée pour le palier (L1).

3. Boîte à plusieurs vitesses selon la revendication 1 ou 2, **caractérisée par** un élément de support (18) relié en rotation en continu à la couronne (P33) du troisième étage de pignons planétaires (P3) qui forme un élément de support de palier côté sortie pour le palier (L1).

4. Boîte à plusieurs vitesses selon l'une quelconque des revendications précédentes, **caractérisée par** un second palier (L2) qui étaie le pignon solaire (P21) du deuxième étage de pignons planétaires (P2) et les supports de pignons planétaires (P22) du deuxième étage de pignons planétaires (P2) axialement les uns contre les autres.

5. Boîte à plusieurs vitesses selon la revendication 4, **caractérisée par** un arbre intermédiaire (15) qui relie ensemble en rotation en continu la couronne (P13) du premier étage de pignons planétaires (P1) et les supports de pignons planétaires (P22) du deuxième étage de pignons planétaires (P2) et qui forme un élément de support de palier côté entrée pour le second palier (L2).

6. Boîte à plusieurs vitesses selon les revendications 2 et 4, **caractérisée en ce que** l'arbre intermédiaire (16) qui relie en rotation en continu l'élément d'accouplement (S21) et le pignon solaire (P21) du deuxième étage de pignons planétaires (P2), forme un élément de support de palier côté sortie pour le second palier (L2).

7. Boîte à plusieurs vitesses selon l'une quelconque des revendications précédentes, **caractérisée par** un troisième palier (L3) qui étaie la couronne (P33) du troisième étage de pignons planétaires (P3) et le support de pignons planétaires (P32) du troisième étage de pignons planétaires (P3) axialement l'un contre l'autre.

8. Boîte à plusieurs vitesses selon la revendication 7, **caractérisée par** une autre unité de commutation (S6) comprenant au moins un élément d'accouplement (S62) et un arbre de sortie de transmission (12) qui relie en rotation en continu le support de pignons planétaires (P32) du troisième étage de pignons planétaires (P3) et l'élément d'accouplement (S62) et qui forme un élément de support de palier côté sortie pour le troisième palier (L3).

9. Boîte à plusieurs vitesses selon les revendications 3 et 7, **caractérisée en ce que** l'élément de support (18) relié en rotation en continu à la couronne (P33) du troisième étage de pignons planétaires (P3) forme un élément de support de palier côté entrée pour le troisième palier (L3).

10. Boîte à plusieurs vitesses selon l'une quelconque des revendications précédentes, **caractérisée en ce qu'**au moins le palier (L1) qui supporte axialement le pignon solaire (P21) du deuxième étage de pignons planétaires (P2) et la couronne (P33) du troisième étage de pignons planétaires (P3) l'un contre l'autre, est disposé à l'intérieur d'un diamètre du rayon intérieur de la couronne (P23) du deuxième étage de pignons planétaires (P2) et/ou à l'intérieur d'un diamètre de rayon intérieur de la couronne (P33) du troisième étage de pignons planétaires (P3).

11. Boîte à plusieurs vitesses selon les revendications 1, 4 et 7, **caractérisée en ce que** le premier palier (L1), le deuxième palier (L2) et le troisième palier (L3) sont directement adjacents axialement.
